# EUROPÄISCHE PATENTSCHRIFT

(11) **EP 2 402 426 B1**
(45) Veröffentlichungstag und Bekanntmachung des Hinweises auf die Patenterteilung: **20.02.2013**
(21) Anmeldenummer: 11169983.1
(22) Anmeldetag: 15.06.2011
(51) Int. Cl.: C12C 7/16, C12C 7/17, C12C 13/00

(54) **Einbringen eines Senkbodens in einen Läuterbottich**
Insertion of a sink bottom into a lauter tun
Introduction d'un faux-fond dans une cuve de clarification

(30) Priorität: 02.07.2010 DE 102010030888
(43) Veröffentlichungstag der Anmeldung: 04.01.2012
(73) Patentinhaber: Krones AG, 93073 Neutraubling (DE)
(72) Erfinder: Deuter, Peter, 85356 Freising (DE)
(74) Vertreter: Grünecker, Kinkeldey, Stockmair & Schwanhäusser

(56) Entgegenhaltungen:
- DE-B- 1 054 943
- DE-U1- 9 111 870
- US-A- 2 032 668
- US-A- 3 033 762

## Beschreibung

Die Erfindung betrifft ein Verfahren zum Einbringen eines Senkbodens, sowie einen Läuterbottich gemäß den Oberbegriffen der Ansprüche 1 und 9.

Beim Läutern findet eine Fest-Flüssig-Trennung der Maische statt. Die Flüssigkeit, auch Würze genannt wird zur weiteren Würze- bzw. Bierherstellung verwendet. Die festen Bestandteile, Treber genannt, sind ein Restprodukt, welches zum Beispiel als Viehfutter oder zur Energiegewinnung eingesetzt wird. Der Läuterbottich ist eines der ältesten und am meist verbreiteten Läutergeräte. Der Läuterbottich umfasst einen Behälter über dessen Boden ein geschlitzter Senkboden vorgesehen ist. Die Maische wird in den Behälter geleitet, wobei die Treber auf dem Senkboden liegen bleiben und die Würze durch die Treberschicht nach unten ablaufen kann und somit filtriert wird. Bei der Fertigung von Läuterbottichen wird zunächst der Behälter gefertigt und anschließend werden die einzelnen Senkbodenelemente bzw. Blätter über eine Einbringöffnung eingebracht. Bislang wurden die Einbringöffnungen für die Senkbodenelemente an der seitlichen Zylinderwandung des Gehäuses oder in der Behälterhaube angeordnet.

Läuterbottiche mit einem Senkboden, der mehrere Senkbodenelemente umfasst, sind in US 2032668 A und DE 1054943 B beschrieben.

Bei einer entsprechenden Einbringöffnung für Senkböden an der Zylinderwandung müssen die Senkbodenelemente seitlich, z.B. unterhalb einer Zwischenebene oder Zwischendecke, eingebracht werden, (wobei der Bereich oberhalb einer Zwischenebene, insbesondere die Bedienebene und der Bereich unterhalb einer Zwischenebene der Antriebsraum ist.) Aus diesem Grund ist in diesem Bereich für das Ein- bzw. Ausbringen der Senkböden ein ausreichend gro-βer Installationsraum vorzusehen. Dies führt zu einem erheblichen räumlichen Mehrbedarf und kann eine Vergrößerung der Gebäudegrundfläche bzw. eine Vergrößerung der Läuterbottichstellfläche nach sich ziehen. Es besteht grundsätzlich, wie zuvor erwähnt, auch die Möglichkeit, die Einbringöffnung oberhalb der Zwischendecke am Behälterdeckel vorzusehen. Eine solche Lösung ist jedoch aufgrund der Form der Haube des Behälters und der damit verbundenen aufwändigen Oberflächenbearbeitung nachteilig. Oft genügt eine solche Einbringöffnung auch nicht den ästhetischen Ansprüchen des Betreibers. Des Weiteren ist eine Undichtigkeit der Einbringöffnung in der Bedienebene besonders gefährlich (Personenverkehr) und hinterlässt zumindest Flüssigkeitsspuren (z.B. Wasser, Reinigungsmittel) auf der Haubenoberfläche, was die Ästhetik zusätzlich mindert. Ebenso ist eine seitliche Einbringung an der Zylinderwandung überhalb einer Zwischenebene möglich, jedoch beinhaltet auch diese die obgenannten Nachteile.

Hiervon ausgehend liegt der vorliegenden Erfindung die Aufgabe zugrunde, ein Verfahren und einen Läuterbottich bereitzustellen, die ein einfaches Ein- und Ausbringen eines Senkbodens bzw. der Senkbodenelemente ermöglichen.

Erfindungsgemäß wird diese Aufgabe durch die Merkmale der Ansprüche 1 und 9 gelöst.

Bei der Herstellung eines Läuterbottichs werden also die Senkbodenelemente durch eine oder mehrere Senkbodeneinbringöffnungen im Läuterbottichboden von unten in den Läuterbottichbehälter eingebracht. Dies ist vorteilhaft, da der Raum unterhalb des Läuterbottichs leicht begehbar und geräumig ist und nicht in der Bedien- sondern in der Antriebsebene liegt. Demnach ist kein zusätzlicher seitlicher Installationsraum notwendig. Vorzugsweise ist insbesondere eine Senkbodeneinbringöffnung vorgesehen. In einer besonders günstigen Ausführung wird diese konstruktiv so in den Behälterboden eingepasst, dass weder die Verrohrungseinrichtungen, Haltevorrichtungen und/oder andere Armaturen und/oder Einrichtungen einer einfachen Einbringung hinderlich sind. Somit kann erheblich Platz gespart werden, da der Läuterbottich beispielsweise sehr nahe an einer Wand oder an einem weiteren Gerät angeordnet werden kann. Dadurch, dass die Senkbodenelemente von unten über die Senkbodeneinbringöffnung eingeschoben werden, wird die Installation wesentlich vereinfacht. Da der Läuterbottichboden eben ausgebildet ist, kann die Senkbodeneinbringöffnung einfach ausgeschnitten werden.

Über die Senkbodeneinbringöffnung können die Senkbodenelemente jedoch auch wieder nach außen ausgebracht werden, z.B. bei Wartungsarbeiten.

Bei der Fertigung des Läuterbottichs wird die Senkbodeneinbringöffnung nach Einbringen der Senkbodenelemente vorteilhafterweise verschlossen. Dazu kann z.B. ein entsprechendes Verschlussteil gefertigt werden.

Es ist vorteilhaft, wenn der Teil, der aus dem Läuterbottichboden zur Erzeugung der Senkbodeneinbringöffnung herausgetrennt wurde, zum Verschließen der Senkbodeneinbringöffnung verwendet wird. Das herausgetrennte Teil kann in die Öffnung eingefügt werden. Das herausgetrennte Teil passt somit exakt und flächenbündig in die Öffnung. Der Spalt zwischen dem Teil und der Senkbodeneinbringöffnung wird dann vorteilhafterweise abgedichtet. Insbesondere kann der Spalt mit einem aushärtbaren Dichtmaterial spaltfrei und planeben ausgegossen werden. Somit kann die Öffnung einfach verschlossen werden. Wenn ein gesondert gefertigtes Verschlusselement in die Senkbodeneinbringöffnung eingefügt wird, kann ein entsprechender Spalt entsprechend abgedichtet werden.

Vorteilhafterweise ist die Öffnung schlitzförmig ausgebildet. Durch den Schlitz können dann die Senkbodenelemente im Wesentlichen senkrecht zum Läuterbottichboden eingeschoben werden. Dies ermöglicht eine möglichst kleine Größe der Senkbodeneinbringöffnung.

Vorteilhafterweise kann die Senkbodeneinbringöffnung in den Läuterbottichboden bereits bei der Fertigung der Bodenplatte zusammen mit anderen Öffnungen, die in der Bodenplatte vorgesehen sind, ausgeschnitten werden. Dies ermöglicht eine besonders kostengünstige Fertigung der Senkbodeneinbringöffnung.

Gemäß der Erfindung wird zur Herstellung des Läuterbottichs zunächst der Behälter gefertigt, also der Läuterbottichboden mit der Seitenwandung des Behälters verschweißt, wobei vorzugsweise auch bereits die Behälterhaube aufgesetzt wird und vorzugsweise anschließend die Senkbodenelemente von unten über die Senkbodeneinbringöffnung in das fertige Gefäß eingebracht werden.

Der erfindungsgemäße Läuterbottich umfasst also einen Läuterbottichboden, der eine Senkbodeneinbringöffnung aufweist, über die die Senkbodenelemente eingebracht und auch ausgebracht werden können.

Die Senkbodeneinbringöffnung ist im Betrieb insbesondere über ein Verschlusselement verschlossen, damit die Würze an dieser Stelle nicht über den Läuterbottichboden abläuft. Es wäre jedoch auch möglich, die Senkbodeneinbringöffnung nicht oder nur teilweise zu verschließen und so gezielt über die Senkbodeneinbringöffnung Würze und/oder Reinigungsmedien abzuleiten und/oder einzubringen.

Besonders vorteilhaft ist es jedoch, wenn das Verschlusselement, das zur Erzeugung der Senkbodeneinbringöffnung aus dem Läuterbottichboden herausgetrennte Teil umfasst. Das herausgetrennte Teil kann dann beispielsweise auf einem Halter, z.B. einem Rahmen oder einer Platte dauerhaft befestigt werden und von unten in die Senkbodeneinbringöffnung eingeführt werden. Der Halter kann dann beispielsweise an dem Behälterboden befestigt werden. Der Spalt zwischen dem herausgetrennten Teil und der Senkbodeneinbringöffnung wird dann abgedichtet. Der Spalt wird insbesondere mit einem aushärtenden Dichtmaterial vergossen. Wenn ein gesondert gefertigtes Verschlusselement verwendet wird, kann ein entstehender Spalt entsprechend abgedichtet werden.

Vorteilhafterweise ist die Senkbodeneinbringöffnung als Schlitz ausgebildet.

Die Erfindung wird nachfolgend unter Bezugnahme folgender Figuren näher erläutert.
- Fig. 1: zeigt schematisch einen Längsschnitt durch einen Läuterbottich gemäß der vorliegenden Erfindung.
- Fig. 2: zeigt eine Draufsicht auf den in Fig. 1 gezeigten Senkboden.
- Fig. 3: zeigt schematisch in perspektivischer Darstellung den Läuterbottichboden auf Trägern.
- Fig. 4: zeigt schematisch in perspektivischer Darstellung den Unterbau des Läuterbottichbodens.
- Fig. 5: zeigt in perspektivischer Darstellung schematisch die Senkbodeneinbringöffnung sowie ein entsprechendes Verschlussteil.

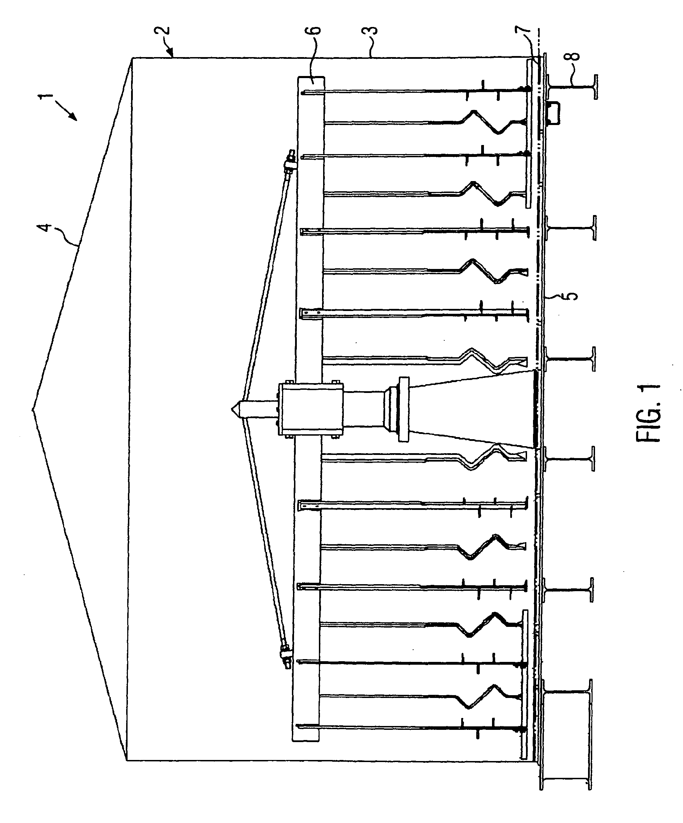

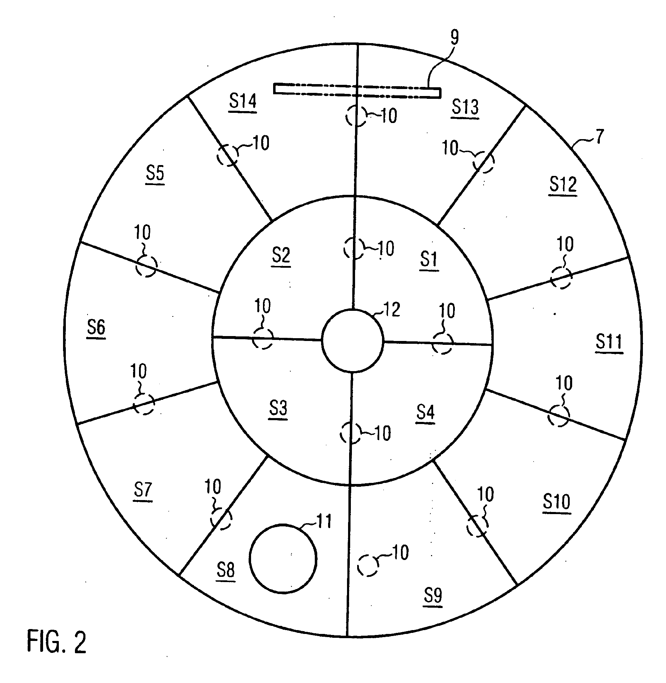

Fig. 1 zeigt einen Längsschnitt durch eine mögliche Ausführungsform eines Läuterbottichs 1 gemäß der vorliegenden Erfindung. In bekannter Weise weist ein Läuterbottich einen Läuterbottichbehälter 2 auf, der hier z.B. eine zylindrische Wandung 3, eine Haube 4 sowie einen Läuterbottichboden 5 aufweist. Der Läuterbottichboden 5 ist hier auf Trägern, z.B. doppelten T-Trägern 8 angeordnet, und kann über diese Träger beispielsweise auf einem Tragrahmen befestigt werden. Über dem Läuterbottichboden 5 befindet sich ein zweiter, in mehrere Elemente bzw. Segmente S1 bis S14 (siehe Fig. 2) unterteilter, einlegbarer Senkboden 7. Der Abstand zwischen Senkboden 7 und Bottichboden 5 beträgt zwischen 10 mm und 60 mm, z.B. ca. 20 mm. Wie aus Fig. 2 hervorgeht, ist der Senkboden also in mehrere Senkbodenelemente unterteilt, die auf entsprechenden Auflageelementen (nicht dargestellt) aufliegen. Insbesondere sind die Auflageelemente fest mit der Unterseite der Senkbodenelemente verbunden. In Fig. 2 sind 14 Senkbodenelemente S1 bis S14 gezeigt. Je nach Größe des Läuterbottichs 1 können jedoch auch mehr oder weniger Senkbodenelemente vorgesehen sein. Der Senkboden ist z.B. als Spaltsiebboden oder geschlitzter Boden ausgebildet (nicht dargestellt) auf dem die Treber liegen bleiben und durch den die filtrierte Würze ablaufen kann. Die einzelnen Senkbodenelemente weisen beispielsweise eine Fläche in einem Bereich von 0,5 m² bis 1,5 m², z.B. ca. 1 m² auf. Aufgrund einer gewünschten freien Durchgangsfläche können die Senkbodenelemente nicht beliebig klein gestaltet werden. Zu große Senkbodenelemente sind hingegen schwer zu handbaben. Die Dicke der Senkbodenelemente ohne Auflageelemente liegt beispielsweise in einem Bereich von 3 bis 10 mm.

Innerhalb des Läuterbottichs ist eine drehbare Aufhack- und Schneidmaschine 6 vorgesehen. Die Aufhack- und Schneidemaschine 6 dient dazu, die Treber auf dem Senkboden 7 aufzulockern bzw. die Treber nach dem Läuterprozess auszuschieben.

Der Senkboden weist eine zentrale Öffnung 12 für das Aufhackmaschinengetriebe auf. Ferner weist der Senkboden 7 eine oder mehrere Öffnungen 11 auf, um Treber über eine Treberluke auszuschieben. Wie gestrichelt dargestellt, befinden sich unterhalb der Senkbodenebene im Läuterbottichboden mehrere Würzeablauföffnungen 10, d. h. Läuteranstiche.

Der Einfachheit halber sind in Fig. 1 nicht die Maischezuleitung, die Maische z.B. von unten in einen Bereich oberhalb des Senkbodens 7 einbringt, eine Würzeablauföffnung 10, über die Würze beispielsweise über den Behälterboden 5 abgeleitet werden kann, sowie entsprechende Verrohrungen dargestellt.

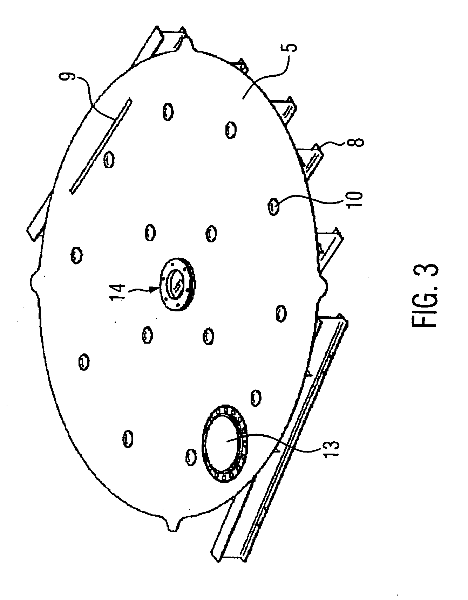

Beim Herstellen des Läuterbottichs wird zunächst der Läuterbottichbehälter 2 gefertigt, wonach dann der Senkboden 7, d.h. die Senkbodenelemente S1 bis S14 eingelegt werden. Dazu ist, wie z.B. aus Fig. 2 und 3 hervorgeht, im Läuterbottichboden 5 eine Senkbodeneinbringöffnung 9 vorgesehen. Die Senkbodeneinbringöffnung 9 ist hier als durchgehender Schlitz ausgebildet, dessen Breite größer ist als die Dicke der Senkbodenelemente S1 bis S14, und wenn bereits Abstandselemente vorgesehen sind, größer als die Dicke der Senkbodenelemente plus der Höhe der Abstandselemente und dessen Länge derart gewählt ist, dass die Senkbodenelemente im Wesentlichen senkrecht zum Läuterbottichboden 5 durch die Senkbodeneinbringöffnung 9 in den Läuterbottichbehälter 2 eingeschoben werden können. Die Schlitzbreite liegt vorteilhafterweise in einem Bereich von 20 mm bis 80 mm. Die Länge ist abhängig von der Größe der Senkbodenelemente und liegt etwa in einem Bereich von 1000 mm bis 1500 mm.

Die Senkbodeneinbringöffnung 9 befindet sich vorteilhafterweise zwischen zwei Trägern 8. Der Läuterbottichboden ist z.B. über einem Tragrahmen auf einer Höhe aufgestellt, dass ausreichend Platz unterhalb des Läuterbottichbodens ist, um die Senkböden einzubringen. Vorteilhafterweise ist der Abstand des Läuterbottichbodens 5 vom Boden 3 m bis 7 m.

Wie aus Fig. 3 hervorgeht, die eine perspektivische Darstellung des Läuterbottichbodens 5 ist, befinden sich in dem Läuterbottichboden 5 neben der Senkbodeneinbringöffnung 9 z.B. auch noch die zuvor erwähnten Würzeablauföffnungen 10, sowie eine Öffnung 14 für das Aufhackmaschinengetriebe mit Flansch sowie einer Öffnung 13 für Treber mit Flansch.

Die eingeschobenen Senkbodenelemente werden dann, auf entsprechenden Auflagen aufliegend, in den Läuterbottich eingelegt.

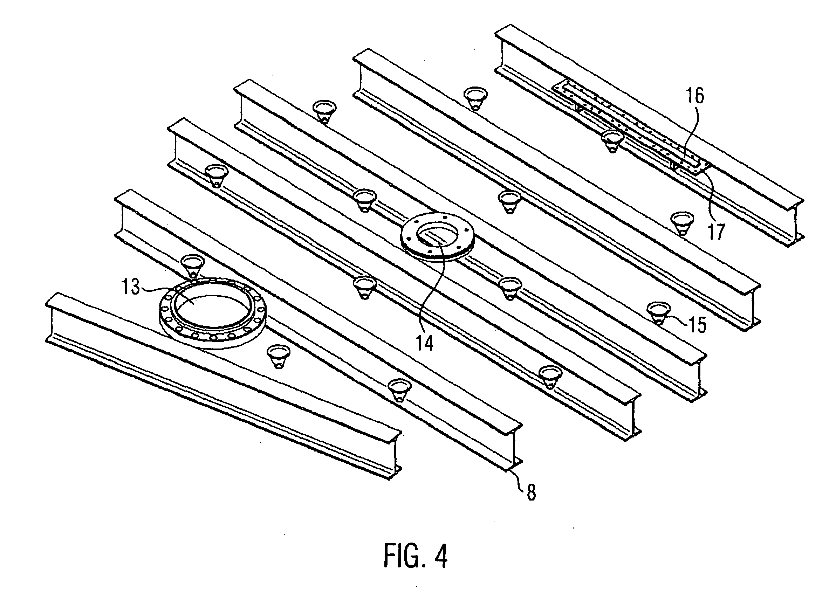

Fig. 4 zeigt in perspektivischer Darstellung den Läuterbottichunterbau, mit mehreren Läutertulpen 15, die an den Würzeablauföffnungen bzw. Läuteranstichen an der Unterseite des Bottichbodens angesetzt sind. Ferner ist ebenfalls ein Flansch angeordnet, der an der mittleren Öffnung für das Aufhackmaschinengetriebe angeordnet ist, sowie ein Flansch, der um die Treberöffnung angeordnet ist.

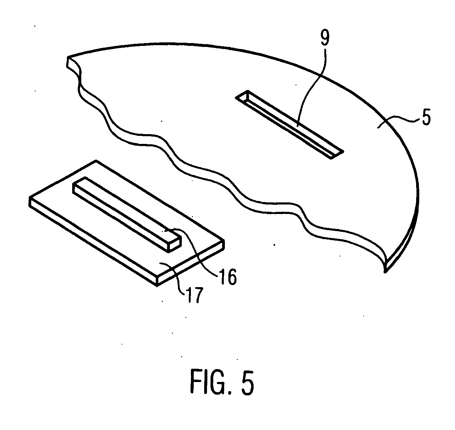

Vorteilhafterweise wird die Senkbodeneinbringöffnung 9 zum Betrieb des Läuterbottichs verschlossen. Wie aus Fig. 4 und 5 hervorgeht, wird die Senkbodeneinbringöffnung 9 über ein Verschlusselement 16, das in die Öffnung 9 eingeschoben wird, verschlossen. Das Verschlusselement 16 kann gesondert gefertigt werden und weist solche Querschnittsabmessungen auf, dass es in die Öffnung 9 passt. Es ist vorteilhaft, wenn das Verschlusselement 16, das zur Erzeugung der Senkbodeneinbringöffnung 9 aus dem Läuterbottichboden 5 herausgetrennte Teil 16 umfasst. Das herausgetrennte Teil kann dann auf einem Halter 17, z.B. einem Rahmen oder einer Platte, dauerhaft befestigt werden und von unten in die Senkbodeneinbringöffnung 9 eingefügt werden. Das Teil 16 fügt sich somit flächenbündig in die Öffnung 9. Der Halter bzw. der Rahmen oder die Platte kann von außen lösbar auf dem Behälterboden 5, z.B. durch Verschrauben, befestigt werden. Der durch das Heraustrennen des Teils 16 entstandene Spalt sollte abgedichtet werden. Das Abdichten kann durch Vergießen eines aushärtenden Dichtmaterials (vorzugsweise ein flüssiger, pastöser Polymerdichtstoff, z.B. Terostat MS930) spaltfrei und planeben erfolgen.

Die vorliegende Erfindung wurde im Zusammenhang mit einem Läuterbottich beschrieben, der mehrere Anstichöffnungen mit einer entsprechenden Verrohrung aufweist. Die vorliegende Erfindung ist jedoch ebenso für einen Läuterbottich geeignet, der um seinen Umfang eine ringförmige Sammelwanne aufweist, in die Würze über Auslassöffnungen in der Seitenwandung 3 und/oder in dem Boden 5 laufen kann. Ein solcher Läuterbottich ist beispielsweise in der EP 1 384 773 beschrieben. Die Erfindung eignet sich gleichermaßen für Läuterbottiche, die einen ringförmigen Behälterquerschnitt mit ringförmiger Läuterfläche aufweisen. Ein solcher Läuterbottich ist beispielsweise in der EP 1 325 951 beschrieben. Die Erfindung beschränkt sich nicht auf die genannten Ausführungsformen, sondern schließt alle denkbaren Läutereinrichtungen mit einem Senkboden ein.

Bei dem erfindungsgemäßen Verfahren wird zur Herstellung des Läuterbottichs zunächst der Läuterbottichbehälter 2 gefertigt, wobei der Läuterbottichboden 5 mit der Seitenwandung oder im Falle eines ringförmigen Läuterbottichs, mit beiden Seitenwandungen verschweißt wird. Es kann auch bereits die Haube 4 auf die Seitenwandung 3 aufgesetzt sein. Vorab wurden bereits beim Fertigen der Bodenplatte für den Läuterbottichboden 5 entsprechende Öffnungen, z.B. Öffnungen 10, 13, 14 (siehe Fig. 3) im Behäiterboden ausgeschnitten. Darüber hinaus wurde auch bereits die Senkbodeneinbringöffnung 9 ausgeschnitten und das ausgeschnittene Teil 16 am Halter 17 angebracht.

Zum Einbringen der Senkbodenelemente S1 bis S14 können die Senkbodenelemente von unten im wesentlichen senkrecht zum Läuterbottichboden 5 durch die Öffnung, hier den Schlitz 9, von Hand eingeschoben werden und auf entsprechenden Auflagen eingelegt werden. Das Einlegen der Senkbodenelemente kann über einen Monteur erfolgen, der beispielsweise über eine Einstiegsluke im oberen Bereich des Läuterbottichs (nicht dargestellt) ins Innere des Läuterbottichs gelangt ist.

Sind alle Senkbodenelemente eingeführt, wird die Senkbodeneinbringöffnung 9 verschlossen, indem z.B. das herausgetrennte Teil 16 auf dem Halter 17 von unten in die Öffnung 9 eingeführt wird. Die Halterung 17 wird von unten am Behälterboden 5 lösbar befestigt. Der Spalt wird, wie zuvor beschrieben, abgedichtet, indem ein Dichtmaterial eingegossen wird.

Weitere Herstellungsschritte, wie beispielsweise Anbringen der Aufhack- und Schneidemaschine bzw. der entsprechenden Verrohrungen etc., werden hier nicht beschrieben, da diese bekannt und nicht wesentlich für die vorliegende Erfindung sind.

Wenn beispielsweise zu Wartungszwecken (z.B. bei Beschädigung durch die Aufhack- und Schneidemaschine) Senkbodenelemente ausgetauscht werden müssen, so kann der Halter 17 von dem Läuterbottichboden 5 gelöst werden und die Öffnung 9 durch Herausbewegen des Verschlusselements 16 freigelegt werden, um so erneut Senkbodenelemente ein- und auszubringen. Anschließend kann die Öffnung 9, z.B. wie zuvor beschrieben, verschlossen werden.

Die Figuren zeigen die Einbringöffnung im rechten Bereich außerhalb des (nicht vollständig dargestellten) Verrohrungsbereichs und innerhalb der Tragevorrichtung, parallel zum äußeren Doppel-T-Träger. Diese Konstruktion ist für diese Ausführung eines Läuterbottichs besonders vorteilhaft. Es ist auch denkbar, die Senkbodeneinbringöffnung beispielsweise im Zentrum eines Läuterbottichs und/oder nicht parallel sondern unter einem Winkel beabstandet zu den Trägern anzubringen, wobei auch andere Haltevorrichtungen möglich sind.

## Patentansprüche

1. Verfahren zum Einbringen eines Senkbodens (7), der mehrere Senkbodenelemente (S1 bis S14) umfasst, in einen Läuterbottichbehälter (2) insbesondere bei der Herstellung oder Wartung eines Läuterbottichs (1), **dadurch gekennzeichnet, dass**
die Senkbodenelemente (S1 bis S14) durch eine Senkbodeneinbringöffnung (9) im Läuterbottichboden (5) von unten in den Läuterbottichbehälter (2) eingebracht werden.

2. Verfahren nach Anspruch 1, **dadurch gekennzeichnet, dass** die Senkbodeneinbringöffnung (9) nach Einbringen der Senkbodenelemente (S1 bis S14) verschlossen wird, insbesondere mit einem Verschlusselement (16).

3. Verfahren nach Anspruch 2, **dadurch gekennzeichnet, dass** zur Erzeugung der Senkbodeneinbringöffnung (9) ein Teil (16) aus dem Läuterbottichboden (5) herausgetrennt wird und die Senkbodeneinbringöffnung (9) mit diesem Teil (16) verschlossen wird.

4. Verfahren nach Anspruch 2 oder 3, **dadurch gekennzeichnet, dass** ein Spalt zwischen dem herausgetrennten Teil (16) oder dem gesondert gefertigten Verschlusselement (16) und der Senkbodeneinbringöffnung (9) abgedichtet wird, wobei der Spalt insbesondere mit einem aushärtenden Dichtmaterial vergossen wird.

5. Verfahren nach mindestens einem der Ansprüche 1 bis 4, **dadurch gekennzeichnet, dass** die Senkbodeneinbringöffnung (9) schlitzförmig ausgebildet wird.

6. Verfahren nach mindestens einem der Ansprüche 1 bis 5, **dadurch gekennzeichnet, dass** die Senkbodeneinbringöffnung (9) in dem Läuterbottichboden (5) bei der Fertigung der Bodenplatte ausgeschnitten wird.

7. Verfahren nach mindestens einem der Ansprüche 1 bis 6, **dadurch gekennzeichnet, dass** bei der Herstellung des Läuterbottichs erst der geschlossenen Läuterbottichbehälter (2) gefertigt wird und dann die Senkbodenelemente (S1 bis S14) von unten über die Senkbodeneinbringöffnung (9) eingebracht werden.

8. Verfahren nach mindestens einem der Ansprüche 1 bis 7, **dadurch gekennzeichnet, dass** Senkbodenelemente (S1 bis S14) durch die Senkbodeneinbringöffnung (9) entnommen werden.

9. Läuterbottich (1) mit einem Läuterbottichbehälter (2), der einen Läuterbottichboden (5) umfasst, sowie mit einem Senkboden (7), der mehrere Senkbodenelemente (S1 bis S14) umfasst, **dadurch gekennzeichnet, dass** der Läuterbottichboden (5) eine Senkbodeneinbringöffnung (9) aufweist, durch die die Senkbodenelemente (S1-S14) von unten in den Läuterbottichbehälter (2) einbringbar sind.

10. Läuterbottich nach Anspruch 9, **dadurch gekennzeichnet, dass** die Senkbodeneinbringöffnung, insbesondere über ein Verschlusselement (16) verschlossen ist.

11. Läuterbottich nach Anspruch 10, **dadurch gekennzeichnet, dass** das Verschlusselement (16), das zur Erzeugung der Senkbodeneinbringöffnung (9) aus dem Läuterbottichboden (5) herausgetrennte Teil (16), umfasst.

12. Läuterbottich nach mindestens einem der Ansprüche 9 bis 11, **dadurch gekennzeichnet, dass** das herausgetrennte Teil (16) auf einem Halter (17) befestigt ist und von unten in die Senkbodeneinbringöffnung (9) eingebracht ist.

13. Läuterbottich nach mindestens einem der Ansprüche 9 bis 12, **dadurch gekennzeichnet, dass** der Spalt zwischen dem herausgetrennten Teil (16) oder dem gesondert gefertigten Verschlusselement und der Senkbodeneinbringöffnung (9) abgedichtet ist, wobei der Spalt insbesondere mit einem aushärtbaren Dichtmaterial vergossen wird.

14. Läuterbottich nach mindestens einem der Ansprüche 9 bis 13, **dadurch gekennzeichnet, dass** die Senkbodeneinbringöffnung (9) als Schlitz ausgebildet ist, dessen Breite größer ist als die Dicke der Senkbodenelemente (S1 - S14), und dessen Länge derart gewählt ist, dass die Senkbodenelemente im Wesentlichen senkrecht zum Läuterbottichboden (5) durch die Senkbodeneinbringöffnung (9) in den Läuterbottichbehälter (2) einschiebbar sind.

## Claims

1. Method of introducing a false bottom (7) which comprises a plurality of false bottom elements (S1 to S14) into a lauter tun container (2), in particular in the manufacture or maintenance of a lauter tun (1), **characterised in that**
the false bottom elements (S1 to S14) are introduced into the lauter tun container (2) from the bottom through a false bottom introduction opening (9) in the lauter tun bottom (5).

2. Method according to claim 1, **characterised in that** the false bottom introduction opening (9) is closed, in particular with a closing element (16), after the false bottom elements (S1 to S14) have been introduced.

3. Method according to claim 2, **characterised in that**, for making the false bottom introduction opening (9), a part (16) is detached from the lauter tun bottom (5), and the false bottom introduction opening (9) is closed with this part (16).

4. Method according to claim 2 or 3, **characterised in that** a gap between the detached part (16) or the separately made closing element (16) and the false bottom introduction opening (9) is sealed, wherein in particular a curing sealing material is poured into the gap.

5. Method according to at least one of claims 1 to 4, **characterised in that** the false bottom introduction opening (9) has a slot-like design.

6. Method according to at least one of claims 1 to 5, **characterised in that** the false bottom introduction opening (9) is cut out in the lauter tun bottom (5) during the manufacture of the bottom plate.

7. Method according to at least one of claims 1 to 6, **characterised in that** in the manufacture of the lauter tun, first the closed lauter tun container (2) is made, and then the false bottom elements (S1 to S14) are introduced from the bottom via the false bottom introduction opening (9).

8. Method according to at least one of claims 1 to 7, **characterised in that** false bottom elements (S1 to S14) are withdrawn through the false bottom introduction opening (9).

9. Lauter tun (1) with a lauter tun container (2) which comprises a lauter tun bottom (5), as well as with a false bottom (7) which comprises a plurality of false bottom elements (S1 to S14), **characterised in that** the lauter tun bottom (5) has a false bottom introduction opening (9), through which the false bottom elements (S1-S14) are introducible into the lauter tun container (2) from the bottom.

10. Lauter tun according to claim 9, **characterised in that** the false bottom introduction opening is closed, in particular by a closing element (16).

11. Lauter tun according to claim 10, **characterised in that** the closing element (16) comprises the part (16) detached from the lauter tun bottom (5) to make the false bottom introduction opening (9).

12. Lauter tun according to at least one of claims 9 to 11, **characterised in that** the detached part (16) is fixed to a retainer (17) and introduced from the bottom into the false bottom introduction opening (9).

13. Lauter tun according to at least one of claims 9 to 12, **characterised in that** the gap between the detached part (16) or the separately made closing element and the false bottom introduction opening (9) is sealed, wherein in particular a curing sealing material is poured into the gap.

14. Lauter tun according to at least one of claims 9 to 13, **characterised in that** the false bottom introduction opening (9) is designed as a slot, the width of which is greater than the thickness of the false bottom elements (S1 - S14), and the length of which is selected in such a way that the false bottom elements are insertable through the false bottom introduction opening (9) into the lauter tun container (2) substantially perpendicular to the lauter tun bottom (5).

## Revendications

1. Procédé pour introduire un faux fond (7), qui comprend plusieurs éléments de faux fond (S1 à S14), dans un récipient formant cuve de clarification (2), en particulier lors de la fabrication ou de l'entretien d'une cuve de clarification (1), **caractérisé en ce que** les éléments de faux fond (S1 à S14) sont introduits dans le récipient formant cuve de clarification (2) par-dessous, par une ouverture d'introduction de faux fond (9) prévue dans le fond de cuve de clarification (5).

2. Procédé selon la revendication 1, **caractérisé en ce que** l'ouverture d'introduction de faux fond (9), après l'introduction des éléments de faux fond (S1 à S14), est obturée, en particulier avec un élément d'obturation (16).

3. Procédé selon la revendication 2, **caractérisé en ce que** pour produire l'ouverture d'introduction de faux fond (9), on sépare du fond de cuve de clarification (5) un élément (16) et on obture l'ouverture d'introduction de faux fond (9) avec cet élément (16).

4. Procédé selon la revendication 2 ou 3, **caractérisé en ce qu'**un interstice entre l'élément (16) séparé ou l'élément d'obturation (16) fabriqué séparément et l'ouverture d'introduction de faux fond (9) est rendu étanche, étant précisé que ledit interstice est en particulier scellé avec un matériau d'étanchéité durcissable.

5. Procédé selon l'une au moins des revendications 1 à 4, **caractérisé en ce que** l'ouverture d'introduction de faux fond (9) a la forme d'une fente.

6. Procédé selon l'une au moins des revendications 1 à 5, **caractérisé en ce que** l'ouverture d'introduction de faux fond (9) est découpée dans le fond de cuve de clarification (5) lors de la fabrication de la plaque de fond.

7. Procédé selon l'une au moins des revendications 1 à 6, **caractérisé en ce que** lors de la fabrication de la cuve de clarification, on fabrique tout d'abord le récipient formant cuve de clarification (2) fermé, puis on introduit les éléments de faux fond (S1 à S14) par-dessous, par l'ouverture d'introduction de faux fond (9).

8. Procédé selon l'une au moins des revendications 1 à 7, **caractérisé en ce que** les éléments de faux fond (S1 à S14) sont enlevés par l'ouverture d'introduction de faux fond (9).

9. Cuve de clarification (1) avec un récipient formant cuve de clarification (2) qui comprend un fond de cuve de clarification (5), et avec un faux fond (7) qui comprend plusieurs éléments de faux fond (S1 à S14), **caractérisée en ce que** le fond de cuve de clarification (5) présente une ouverture d'introduction de faux fond (9) par laquelle les éléments de faux fond (S1-S14) peuvent être introduits par-dessous dans le récipient formant cuve de clarification (2).

10. Cuve de clarification selon la revendication 9, **caractérisée en ce que** l'ouverture de faux fond est obturée, en particulier grâce à un élément d'obturation (16).

11. Cuve de clarification selon la revendication 10, **caractérisée en ce que** l'élément d'obturation (16) comprend l'élément (16) séparé du fond de cuve de clarification (5) pour produire l'ouverture d'introduction de faux fond (9).

12. Cuve de clarification selon l'une au moins des revendications 9 à 11, **caractérisée en ce que** l'élément (16) séparé est fixé sur un support (17) et est introduit dans l'ouverture d'introduction de faux fond (9) par-dessous.

13. Cuve de clarification selon l'une au moins des revendications 9 à 12, **caractérisée en ce que** l'interstice entre l'élément (16) séparé ou l'élément d'obturation fabriqué séparément et l'ouverture d'introduction de faux fond (9) est rendu étanche, étant précisé que ledit interstice est en particulier scellé avec un matériau durcissable.

14. Cuve de clarification selon l'une au moins des revendications 9 à 13, **caractérisée en ce que** l'ouverture d'introduction de faux fond (9) est conçue comme une fente dont la largeur est supérieure à l'épaisseur des éléments de faux fond (S1-S14) et dont la longueur est choisie pour que les éléments de faux fond puissent être glissés dans le récipient formant cuve de clarification (2) par l'ouverture d'introduction de faux fond (9) globalement perpendiculairement au fond de cuve de clarification (5).
